Europäisches Patentamt

European Patent Office

Office européen des brevets

(19)

(11) EP 0 901 298 A1

(12) DEMANDE DE BREVET EUROPEEN

(43) Date de publication:
10.03.1999 Bulletin 1999/10

(51) Int Cl.⁶: H04Q 7/36

(21) Numéro de dépôt: 98402216.0

(22) Date de dépôt: 08.09.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 08.09.1997 FR 9711123
08.09.1997 FR 9711125

(71) Demandeur: ALCATEL
75008 Paris (FR)

(72) Inventeurs:
• Mercier, Françoise
92500 Rueil Malmaison (FR)
• Brouet, Jérôme
75014 Paris (FR)
• Charrière, Patrick
78000 Versailles (FR)
• Kumar, Vinod
75005 Paris (FR)

(74) Mandataire: El Manouni, Josiane et al
COMPAGNIE FINANCIERE ALCATEL
Dépt. Propr. Industrielle,
30, avenue Kléber
75116 Paris (FR)

(54) Station de base contrôlant les communications mises en oeuvre dans une cellule d'un réseau de radiocommunication cellulaire et numérique et procédé de contrôle correspondant

(57) L'invention concerne une station de base contrôlant les communications mises en oeuvre dans une cellule (17) d'un réseau de radio-communication cellulaire et numérique. Selon l'invention, cette station de base comprend un ensemble d'au moins deux relais (13) d'émission et de réception géographiquement répartis dans ladite cellule, chacun desdits relais pouvant émettre des signaux vers des stations mobiles présentes dans une zone de ladite cellule, et recevoir des signaux émis (12) par lesdites stations mobiles, dans ladite zone ; et un centre de concentration (15), traitant les signaux (14) reçus par chacun desdits relais (13), et délivrant à chacun desdits relais des signaux (14) à émettre. En outre, la station de base affecte sélectivement à chaque communication avec une station mobile (11) un jeu d'au moins deux desdits relais (23).

L'invention concerne également un procédé correspondant.

Fig. 1

## Description

Le domaine de l'invention est celui des communications numériques, dans des systèmes de radio-communication cellulaire. L'invention s'applique en particulier aux systèmes mettant en oeuvre des transmissions numériques (voix, données, signalisation...) selon la technique à accès multiple par répartition dans le temps AMRT (ou TDMA pour "Time Division Multiple Access" en langue anglaise), et par exemple aux réseaux de type GSM (pour "Global System for Mobile communications" en anglais).

Dans les réseaux de communication cellulaires classiques, chaque cellule comprend une station de base qui assure les communications avec les stations mobiles qui se trouvent dans cette cellule.

Chaque station de base se présente donc sous la forme d'un ouvrage unique et équipé de moyens d'émission et de réception de signaux hertziens sur la zone géographique couverte par la cellule.

La station de base utilise plusieurs fréquences de diffusion, et peut mettre en oeuvre un mécanisme de sauts de fréquence. Pour éviter les problèmes de perturbations inter-cellulaires, les jeux de fréquences alloués à des cellules voisines sont distincts.

Le succès rencontré par les systèmes de radio-téléphonie cellulaire pose cependant des problèmes. En effet, les cellules sont prévues pour gérer un nombre donné de communications (fonction notamment du nombre de fréquences allouées par cellule et de la règle de multiplexage temporel, de la qualité de service souhaitée, représentée par exemple par le taux de blocage cumulé avec le taux de perte d'appel). Lorsque ce nombre limite est atteint, il n'est plus possible d'accepter de nouvelles communications.

Cette situation se rencontre souvent, notamment en milieu urbain, où il n'est pas rare qu'un nombre élevé de communications soient souhaitées simultanément, dans un périmètre restreint. L'utilisateur peut se trouver alors dans l'impossibilité de passer une communication.

Un autre problème se pose également, notamment en milieu urbain : celui de la continuité de la couverture, dans des conditions correctes. Il n'est pas rare qu'en certains endroits, les communications ne soient pas possibles (zones non couvertes du fait de la présence d'un obstacle ou d'un brouilleur, par exemple). Lorsque la station mobile se déplace, cela conduit à une coupure intempestive de la communication.

Pour résoudre le premier problème, on peut bien sur envisager d'augmenter la ressource de diffusion affectée à chaque cellule. Toutefois, on sait que le spectre des fréquences disponibles est limité (toutes les ressources disponibles sont déjà réservées à l'application du système GSM et DCS). Cette solution n'est donc pas réaliste.

Une autre technique proposée est de réduire la taille des cellules (appelées alors micro-cellules). Ainsi, le nombre global de communications augmente. Par voie de conséquence, des problèmes d'interférences inter-cellulaires se rajoutent et le système devient de cette manière difficilement gérable.

Cette technique présente cependant plusieurs inconvénients. Il est d'usage, d'ajouter une cellule dite parapluie ("umbrella cell" en langue anglaise) qui recouvre plusieurs micro-cellules pour recueillir les communications qui n'ont pu être assurées avec succès sur la couche micro-cellulaire. Cette technique définit donc une structure multi-couches. Cela augmente par conséquent la complexité du système.

Par ailleurs, il apparaît clairement que la réduction de la taille des cellules entraîne des changements de cellules nombreux (par exemple, en milieu urbain, une micro-cellule peut avoir une portée très faible de moins de 300 m !). Les transferts de cellules supposent une négociation entre les cellules ("hand-over" en anglais), et induisent des désagréments (pertes temporaires) pour l'utilisateur.

De plus, la difficulté de réglage des paramètres de négociations entre les cellules (ou "hand-over") rend cette opération délicate quand la taille des cellules est très faible (par exemple inférieure à 300 mètres). Ceci cause des pertes d'appel au cours des communications.

L'invention a notamment pour objectif de palier ces différents inconvénients de l'état de la technique.

Plus précisément, un des objectifs de la présente invention est de fournir une station de base et un procédé contrôlant les communications mises en oeuvre dans une cellule d'un réseau de radio-communication cellulaire et numérique permettant d'améliorer la couverture géographique radio contrôlée par une station de base (et donc ne nécessitent pas la mise en oeuvre de micro-cellules classiques telles que décrites ci-dessus).

En d'autres termes, un objectif de l'invention est notamment de limiter les transferts inter-cellulaires, ou "hand over", tout en assurant une grande capacité de trafic, une bonne qualité de service et une bonne qualité de communication.

Un objectif complémentaire de l'invention est de fournir une telle station de base et un tel procédé permettant d'augmenter le nombre de communications mises en oeuvre dans une cellule, tout en conservant une bonne qualité de communication.

Un autre objectif complémentaire de l'invention est de fournir une telle station de base et un tel procédé permettant d'obtenir un meilleur suivi de la station mobile à l'intérieur d'une même cellule, par rapport aux techniques classiques.

Un autre objectif de l'invention est de fournir une telle station de base et un tel procédé ne nécessitant pas la présence d'une couche supplémentaire ("umbrella cell" en langue anglaise).

Un autre objectif de l'invention est de fournir une telle station de base et un tel procédé permettant d'optimiser la puissance des signaux émis par la station de base et les stations mobiles, et par voie de conséquence diminuer le coût de cette émission et diminuer les interférences.

L'invention a également pour objectif de fournir une telle station de base et un tel procédé permettant d'améliorer la qualité des signaux, par rapport aux techniques classiques.

Cet objectif peut se traduire notamment par les sous-objectifs suivants :

- limiter le niveau des interférences ;
- diminuer la probabilité de perte d'appel ;
- augmenter la qualité de réception des signaux de la station mobile.

La qualité d'un réseau de radio-communication cellulaire et numérique peut être caractérisée par l'indice GoS (pour "Grade of Service" en langue anglaise) qui s'exprime de la manière suivante :

$$GoS = Pb + 10.Pfct$$

où :

- Pb est la probabilité de blocage d'appel ;
- Pfct est la probabilité de perte d'appel en cours de communication.

Cette probabilité de blocage d'appel dépend directement du fait que toutes les ressources physiques sont utilisées et/ou que les ressources non utilisées sont indisponibles (quand, par exemple, le niveau d'interférence est trop fort et/ou la ressource est réservée pour un appel en transfert) et donc interdit un nouvel appel.

Cette probabilité de perte d'appel en cours de communication est directement liée aux problèmes de transferts de communications entre cellules (ou "handover").

Un objectif de l'invention est d'assurer au moins un GoS avec les valeurs généralement admises en radio-mobile (par exemple, 2% en milieu extérieur (ou "outdoor" en anglais) et 0,5% en milieu intérieur (ou "indoor" en anglais)).

Ces différents objectifs, ainsi que d'autres qui apparaîtront par la suite, sont atteints selon l'invention à l'aide d'une station de base contrôlant les communications mises en oeuvre dans une cellule d'un réseau de radio-communication cellulaire et numérique, ladite station de base comprenant un ensemble d'au moins deux relais d'émission et de réception géographiquement répartis dans ladite cellule, chacun desdits relais pouvant émettre des signaux vers des stations mobiles présentes dans une zone de ladite cellule, et recevoir des signaux émis par lesdites stations mobiles, dans ladite zone, et un centre de concentration, traitant les signaux reçus par chacun desdits relais, et délivrant à chacun desdits relais des signaux à émettre, la station de base affectant sélectivement à chaque communication avec une station mobile (11) un jeu d'au moins deux desdits relais (23).

Le principe général de l'invention repose donc sur la décentralisation de la station de base, à l'aide de plusieurs relais couvrant chacun une partie de la cellule. Une telle station de base peut être dite "distribuée".

Chaque relais a ainsi besoin d'une puissance moindre que celle d'une station de base classique, et est associée à une partie seulement des mobiles présents et actifs dans la cellule.

De plus, cette répartition des relais permet de mieux couvrir la cellule, notamment en milieu urbain ou en milieu à forte densité d'obstacles.

La station de base selon l'invention comprend un centre de concentration, qui "collecte" les signaux que reçoivent les relais, et fournit à ces derniers les signaux qu'ils doivent émettre.

L'invention n'impose pas de contrainte sur le nombre de relais qui constituent une même cellule, ni sur la nature de ces relais ou du centre de concentration. On notera néanmoins que, pour une surface donnée, plus le nombre de relais est grand, meilleure est la couverture radio, et plus la station de base et les stations mobiles peuvent émettre des signaux à une puissance faible.

Une cellule peut donc comprendre un nombre de relais quelconque, supérieur ou égal à deux. Les relais peuvent être de simples antennes d'émission/réception. Le centre de concentration communique avec eux par voie hertzienne et/ou par câble et/ou par infrarouge. Il peut gérer lui-même l'activation des relais impliqués dans une communication et constitue l'organe décisionnaire. On peut également prévoir que les relais comprennent des moyens d'analyse de la qualité des signaux.

Il est à noter que cette approche est tout à fait nouvelle pour l'homme du métier. En effet, l'invention repose sur l'ajout de moyens supplémentaires spécifiques répartis, allant à l'encontre de la notion même de cellule contrôlée par une station de base géographiquement unique. Toutefois, il apparaît que l'invention permet d'améliorer la capacité en communications du réseau, de réduire les risques d'interférences, d'améliorer la couverture radio d'une cellule, de limiter le nombre de "hand-over" inter-cellulaire et d'éliminer les coupures temporaires de communication au moment du changement de cellule.

Enfin, seuls les relais nécessaires à une communication sont sélectionnés et donc activés et/ou réservés pour cette communication tandis que les autres sont désactivés et ainsi disponibles pour d'autres communications.

On notera que, du fait qu'au moins deux relais sont toujours sélectionnées, on obtient une qualité optimisée. En effet, on limite notamment le risque de perte de signaux momentanée ainsi que la puissance de chaque relais.

Dans un mode de réalisation préférentiel de l'invention, l'affectation d'un relais à une communication tient compte d'au moins une information représentative de la qualité de la communication entre la station mobile et ledit relais correspondant, pour la voie montante.

En d'autres termes, on sélectionne les meilleurs relais adaptés à la communication à établir et/ou en cours.

Suivant un mode de réalisation, ladite affectation constitue une détermination d'une position approximative de ladite station mobile dans ladite cellule.

Avantageusement, lors d'une phase d'initialisation d'une communication avec une station mobile, ladite affectation est effectuée sur tous les relais de ladite cellule, de façon à effectuer une présélection des meilleurs relais pour continuer ladite communication.

Ainsi, cela permet de bénéficier dès le début d'une communication, d'une affectation des relais les meilleurs, par exemple les plus proches, pour poursuivre la station mobile tout au long de la communication engagée.

De façon préférentielle, lors d'une phase de communication active avec une station mobile, ladite affectation est effectuée uniquement sur les relais déjà affectés et au moins certains relais disponibles, de façon à réactualiser la sélection des meilleurs relais.

Ainsi, cela permet de limiter la recherche des relais les meilleurs parmi ceux déjà activés pour la communication en cours et ceux qui ne sont pas déjà réservés à d'autres communications.

De façon préférentielle, ladite information appartient au groupe comprenant :

- le rapport signal à bruit pour ladite communication ;
- le rapport signal à interférences pour ladite communication ;
- la puissance reçue par ledit relais pour ladite communication ;
- un taux d'erreur binaire brut et/ou après décodage, pour ladite communication ;
- un taux de perte de trame pour ladite communication ;
- une indication de positionnement géographique.

Cette liste est bien sûr non limitative.

Cette information en rapport avec la qualité de la communication peut notamment être le rapport signal à interférences de la communication, qui semble particulièrement efficace pour caractériser la qualité de la communication à établir. Il est clair que cette information peut reposer sur une combinaison des éléments de ce groupe.

Il est à noter que cette information peut également tenir compte de données issues d'un autre système, notamment d'un système de positionnement, tel que le GPS (pour "Global Positioning System" en langue anglaise) qui donne une indication de positionnement géographique de la station mobile impliquée dans la communication, pour notamment sélectionner les relais les plus proches par exemple.

Selon une variante avantageuse, ladite affectation tient compte d'une pondération d'une information sur la puissance reçue par ledit relais par une information sur le rapport signal à interférences ou sur le rapport signal à bruit, pour ladite communication.

En effet, il est possible qu'un ou plusieurs relais affectés à la communication à établir et/ou en cours se retrouvent de façon intermittente dans une zone d'ombre suite à un obstacle, par exemple un camion qui passe, alors les relais en question ont une baisse brutale de réception des signaux (donc une baisse respective du niveau de la puissance reçue par les relais concernés). Dans ce cas, d'autres relais ayant une meilleure réception (quant au niveau de la puissance reçue par les relais) prennent la relève de la communication en cause.

En outre, un ou une pluralité de brouilleurs peut s'intercaler entre la station mobile et un ou une pluralité de relais, ce qui n'a aucune influence sur le niveau de la puissance reçue par les relais affectés à la communication concernée. En revanche, le rapport signal à interférences s'en trouve amoindri et cela permet d'effectuer une nouvelle affectation de relais, qui reçoivent les signaux éventuellement avec un niveau de puissance plus petit par rapport aux relais précédemment sélectionnés mais avec un rapport signal à interférences meilleur.

Avantageusement, ladite au moins une information représente :

- une moyenne de valeurs prises sur une durée prédéterminée, lors d'une phase de communication active ;
- une unique valeur mesurée, lors d'une phase d'initialisation d'une communication.

Ainsi, quand un appel est établi, la ou les informations prises en compte, correspondent à des valeurs moyennes calculées sur une certaine durée correspondant par exemple à un nombre fini et prédéterminé de trames. De cette façon, on évite de prendre en compte des perturbations ponctuelles ou impulsionnelles.

En revanche, lorsque l'appel est à établir, la ou les informations prises en compte correspondent chacune à une valeur unique (pour chaque relais) mesurée par exemple sur une seule trame.

Préférentiellement, tous les relais d'une même cellule émettent de manière synchrone.

En outre, la synchronisation des signaux émis par les relais est d'une précision compatible avec de la capacité d'égalisation du récepteur de ladite station mobile (par exemple d'une longueur de quelques symboles).

Ainsi, il n'y a pas de perturbations, bien que les données soient issues de plusieurs relais. Les données reçues et décalées dans le temps sont traitées comme du multi-trajet par la station mobile.

Avantageusement, l'affectation d'un jeu de relais est mise à jour périodiquement et/ou lorsqu'un paramètre représentatif de la qualité de la communication est inférieur à un seuil prédéterminé.

Selon un mode de réalisation avantageux, chacun desdits relais émet :

- l'ensemble des données de signalisation concernant ladite cellule, sur au moins une fréquence balise commune à ladite cellule ;
- uniquement les données de communication concernant les communications auxquelles il est affecté, sur au moins une fréquence de communication.

Chaque relais émet donc les données propres aux communications sur au moins une fréquence de communication vers la station mobile. De plus, les relais émettent tous systématiquement toutes les données de signalisation (BCCH en GSM).

Avantageusement, chacun desdits relais transmet audit centre de concentration au moins une des informations appartenant au groupe comprenant :

- un signal analogique en bande radio ou à fréquence intermédiaire ;
- des échantillons du signal reçu en bande de base avant démodulation ;
- des décisions souples sur le contenu du signal reçu après démodulation ;
- des décisions dures sur le contenu du signal reçu après démodulation ;
- un taux d'erreur binaire ;
- une indication de puissance radio du signal reçu ;
- une indication du rapport signal à bruit pour le signal reçu ;
- une indication du rapport signal à interférences pour le signal reçu.

Lesdites informations sont recombinées dans ledit centre de concentration, de façon que la qualité de la communication soit améliorée.

Ainsi, pour la voie montante, cela permet d'améliorer la qualité de la communication.

De façon préférentielle, ladite station de base met en oeuvre une technique de saut de fréquence, pour chacune desdites communications.

Ainsi, cela permet de limiter les interférences avec d'autres communications qui s'effectuent dans une cellule voisine et, donc de réduire la probabilité de perte d'appel pour cause de mauvaise qualité de communication (qui dépend de la qualité du lien radio caractérisé par le rapport signal à interférence (ou "C/I" pour "Carrier/Interference" en anglais) ou au rapport signal à bruit (ou "SNR" pour "Signal to Noise Ratio" en anglais).

L'invention concerne également un procédé de contrôle des communications gérées par une telle station base. Selon ce procédé :

- on répartit géographiquement dans ladite cellule au moins deux relais d'émission et de réception, chacun desdits relais pouvant émettre des signaux vers des stations mobiles présentes dans une zone de ladite cellule, et recevoir des signaux émis par lesdites stations mobiles dans ladite zone ;
- on traite dans un centre de concentration les signaux reçus par l'ensemble desdits relais ;
- on distribue, depuis ledit centre de concentration, des signaux à émettre à chacun desdits relais ;
- on affecte sélectivement à chacune desdites communications mises en oeuvre dans ladite cellule un jeu d'au moins deux desdits relais.

En d'autres termes, ce procédé repose sur la répartition dans une cellule d'une pluralité de relais permettant notamment de présenter une meilleure couverture géographique radio par rapport à une cellule classique. Ces relais jouent le rôle d'intermédiaires dans les communications. C'est-à-dire qu'ils réémettent (après les avoir éventuellement traités) les signaux issus de la station mobile en direction du centre de concentration, de même, ils retransmettent les signaux reçus du centre de concentration vers la station mobile impliquée dans une communication.

Ce centre de concentration "écoute" tout ce qui lui parvient et regroupe tous les signaux issus des relais qui reçoivent ceux issus d'une station mobile impliquée dans une communication.

En outre, ce centre de concentration assure la diffusion des signaux à transmettre à chaque relais de la cellule.

Préférentiellement, l'opération d'affectation de relais à une communication maximise, selon un critère prédéterminé, la qualité de la communication pour un nombre donné de relais à sélectionner.

Selon un mode de réalisation préférentiel de l'invention, ladite affectation d'un jeu de relais est mise à jour périodiquement et/ou lorsqu'un paramètre représentatif de la qualité de la communication est inférieur à un seuil prédéterminé.

Ledit procédé peut être mis en oeuvre aussi bien à l'intérieur d'au moins un local ("in-door") qu'en milieu extérieur ("out-door") ou encore en milieu mixte (une partie à l'intérieur d'au moins un local et l'autre partie à l'extérieur).

De façon avantageuse, ledit jeu de relais dédiés à une même communication émet de manière synchrone le même signal destiné à une station mobile en communication.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 présente un synoptique de la station de base selon l'invention ;
- la figure 2 illustre un schéma simplifié d'un mode de réalisation particulier d'une affectation d'un jeu de relais à une communication à assurer par la station de base de la figure 1.
- la figure 3 illustre de façon générale le procédé selon l'invention tel que mis en oeuvre dans les cellules d'un système comprenant une station de base de la figure 1.

L'invention concerne donc notamment l'amélioration de la capacité de systèmes de radio-communication cellulaire numérique tout en conservant une bonne qualité de communication et de service.

Le principe général de l'invention repose sur l'ajout de moyens intermédiaires dans les communications, à savoir des relais et un centre de concentration pour chaque cellule du réseau attachée à une station de base. Des relais d'une même cellule se chargent d'assurer la retransmission de signaux issus d'une station mobile vers un centre de concentration propre à cette même cellule ainsi que ceux issus du centre de concentration vers une station mobile.

Ce centre de concentration effectue notamment le regroupement des signaux issus des relais et contrôle l'émission de signaux vers les différents relais de la cellule auquel il est associé. Au moins deux relais, qui assurent la communication avec le mobile, sont sélectionnés en fonction d'une ou plusieurs informations représentatives de la qualité de la communication.

Ainsi, une station de base adapte les voies d'une communication en fonction d'une qualité optimale de cette communication que l'on peut obtenir.

Selon l'invention, on active uniquement les deux (ou plus) relais qui permettent la meilleure qualité (en tenant compte par exemple de la puissance reçue pondérée par le rapport signal à interférences et/ou du rapport signal à bruit) d'une communication tout en désactivant les autres. Ceux-ci sont alors disponibles notamment pour d'autres communications.

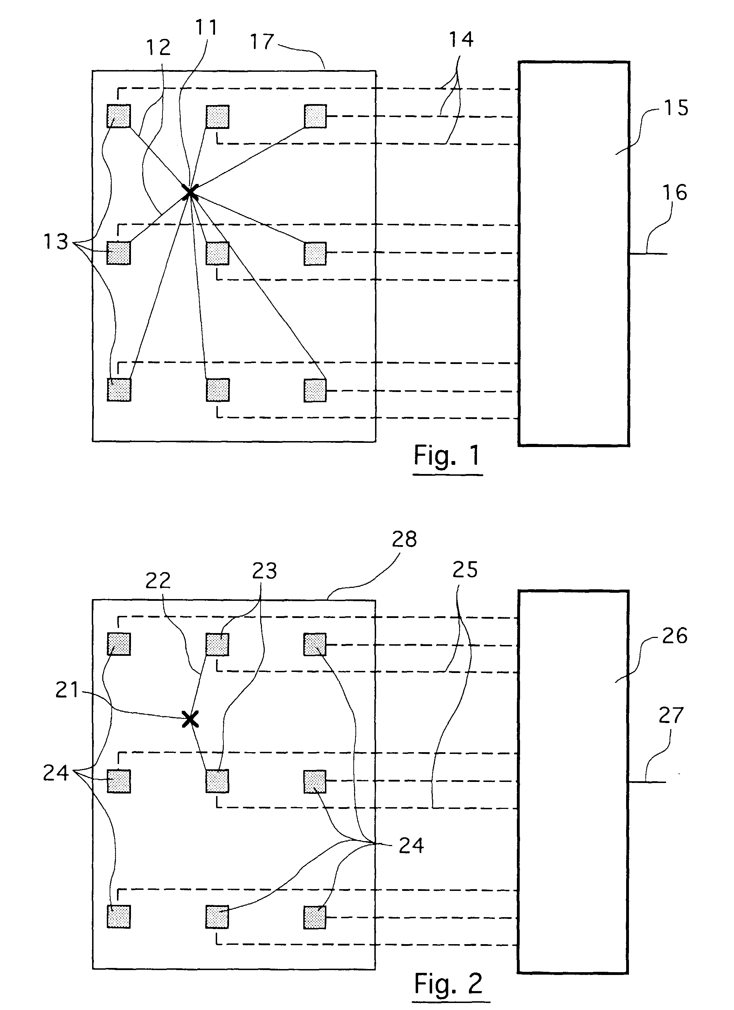

On présente maintenant, en relation avec le schéma de la figure 1, le fonctionnement d'un mode de réalisation particulier de l'invention.

Lors d'une phase d'initialisation d'une communication, tous les relais 13 d'une même cellule écoutent la station mobile 11. On rappelle qu'en phase d'initialisation, la station mobile 11 émet sur un morceau de signal ou "burst" 12 du canal "RACH" (en GSM) soit une requête (appel sortant) soit un message d'acquittement (appel entrant). Ainsi, tous les relais 13 démodulent les signaux 12 émis par les stations mobiles et envoient les signaux démodulés et des rapports 14 périodiquement par voie hertzienne et/ou par câble et/ou par infrarouge (ou tout autre moyen de transmission) à un centre de concentration 15.

Dans un autre mode de réalisation, les traitements effectués par les relais (démodulation,...) peuvent être déportés dans les centres de concentration.

Tous les relais 13 émettent systématiquement les données de signalisation communes à la cellule sur une fréquence balise propre à la cellule.

Ce centre de concentration 15 regroupe alors tous les signaux 14 issus de tous les relais 13 et est en liaison 16 avec le reste du réseau mobile.

En zone urbaine, pour assurer une couverture extérieure, les relais 13 peuvent être placés par exemple à l'angle de deux rues et/ou en dessous du niveau des toits et distants de quelques dizaines de mètres.

Lors d'une phase d'initialisation d'une communication, les rapports 14 comprennent notamment le niveau de la puissance reçue (sur la voie montante) par chaque relais de la cellule impliqué dans la communication. Eventuellement, ce niveau de puissance reçue peut être pondéré par le rapport signal à interférences ou le rapport signal à bruit. Cette pondération consiste par exemple à multiplier le niveau de la puissance reçue par 0 ou 1 selon que le rapport signal à interférences ou le rapport signal à bruit est inférieur ou supérieur à un certain seuil prédéterminé). Pour cette phase, les valeurs des informations prises sont des valeurs uniques, par exemple mesurées sur une seule trame. En fonction des rapports 14 reçus des différents relais 13, le centre de concentration 15 effectue une présélection des meilleurs relais pour la suite de la communication ainsi engagée.

Le centre de concentration peut ainsi comparer la qualité de réception des différents relais, et sélectionner les meilleurs pour chaque communication. Avantageusement, on retiendra les n (= 4 ou 5 par exemple) relais les plus efficaces. Il est à noter qu'en phase de communication active, présentée en détail par la suite, on retient par exemple les 2 ou 3 meilleurs relais.

Suite à cette sélection, la station mobile 21 communique (22) avec les deux meilleurs relais 23 correspondant aux deux relais les plus efficaces. Seuls ces relais 23 sont activés pour assurer cette communication alors que les autres relais 24 sont désactivés pour cette communication. Ainsi, on limite les ressources utilisées pour une communication ce qui permet d'utiliser les relais restant libres pour d'autres communications et on focalise l'énergie sur la zone utile de la communication concernée.

Lors de cette phase de communication active, pour chaque relais, le centre de concentration 26 calcule le niveau de puissance moyenne reçue par ce même relais à partir des rapports qu'il reçoit de celui-ci. Ce calcul est effectué en prenant aussi en compte la qualité de démodulation de chaque relais. En d'autres termes, la puissance moyenne reçue par chaque relais est pondérée par la qualité de démodulation de chaque relais. Cette pondération consiste par exemple à multiplier le niveau de la puissance moyenne reçue par 0 ou 1 selon que le rapport signal à interférences ou le rapport signal à bruit est inférieur ou supérieur à un certain seuil prédéterminé). Pour cette phase, les valeurs des informations prises sont des valeurs moyennées, par exemple mesurées sur une durée précise correspondant par exemple à un nombre de trames fixe.

Ce calcul est effectué sur un nombre fini et prédéterminé de trames, sur la voie montante.

Cette qualité de démodulation dépend du rapport du niveau de la puissance de la porteuse sur niveau des interférences ("C/I") et/ou du rapport signal à bruit ("SNR").

Seuls les relais sélectionnés 23 émettent spécifiquement les données relatives à la communication avec la station mobile 21 correspondante sur une fréquence ou sur un jeu de fréquences. Dans le cas de l'utilisation d'un jeu de fréquences, on utilise une loi prédéterminée de saut de fréquences pour passer de l'une à l'autre de ces fréquences.

Dans le sens descendant, le centre de concentration 26 reçoit (27) les signaux du réseau, et les redistribue aux relais sélectionnés pour la communication correspondante. Ces relais sélectionnés 23 émettent des signaux 22 identiques de manière synchrone en direction de la station mobile 21.

Dans le sens montant, les relais 23 transmettent de manière synchrone au centre de concentration 26 des signaux 25 qui comprennent par exemple des échantillons du signal reçu en bande de base avant démodulation, des coefficients de pondération affectés à chaque relais, une information sur la puissance radio du signal reçu par chaque relais, une indication concernant la qualité de la démodulation. Ce centre de concentration 26 recombine ces informations pour augmenter la qualité de la communication.

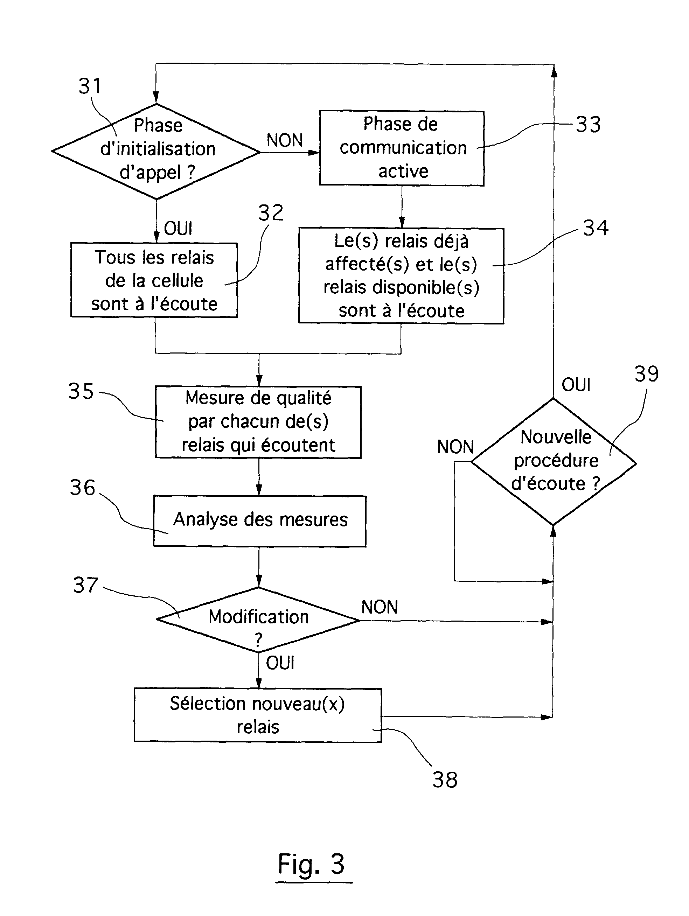

La figure 3 illustre de façon générale le procédé mis en oeuvre dans les cellules d'un système tel que décrit précédemment.

Lors d'une phase d'initialisation d'une communication (31), tous les relais de la cellule concernée écoutent (32). Ainsi, lorsqu'une station mobile envoie une requête (appel sortant) ou un message d'acquittement (appel entrant) sur un "burst" du canal RACH en GSM, il est possible d'effectuer une présélection des meilleurs relais. Cette présélection est reprise et modifiée ensuite lors de la phase de communication active.

Si l'appel est établi (ou lors d'une communication active) (33), tous les relais déjà affectés à la communication en cours et certains des relais disponibles prennent part à l'écoute (34) de la communication en cours. En d'autres termes, en vue d'effectuer une nouvelle sélection de relais, d'autres relais que ceux déjà sélectionnés (par exemple les plus proches de ces derniers) écoutent.

On mesure régulièrement (35) (par exemple toutes les une ou deux secondes) la qualité de la réception (sur la voie montante) des relais sélectionnés pour l'écoute, pour chaque communication suivie par un centre de concentration.

Puis, on analyse (36) les mesures de qualité.

Cette analyse s'effectue, pour chaque relais, sur la mesure prise, par exemple sur une seule trame, lors d'une initialisation d'une communication et sur des mesures prises par exemple sur un nombre fixe de trames, lors d'une communication active. Le contenu de ces mesures a déjà été discuté en détail ci-dessus. Cette analyse (36) consiste par exemple à repérer les n relais les plus efficaces.

En fonction de l'analyse (36) des mesures de qualité, on décide (37) s'il convient de modifier la sélection des relais.

Si on observe que les relais sélectionnés ne sont plus les plus efficaces, par exemple du fait d'un déplacement de la station mobile, on sélectionne (38) les nouveaux relais identifiés comme les plus efficaces et on désactive les relais précédents.

Une fois la sélection de(s) nouveau(x) relais effectuée, ou s'il n'y a pas lieu de modifier la sélection des relais, on passe à l'étape suivante (39).

Lorsqu'une nouvelle procédure d'écoute est à engager, on réitère les opérations précitées (étapes 31 à 38), de façon à rafraîchir la sélection des relais.

Tant qu'aucune nouvelle procédure d'écoute n'est à engager, on attend (il s'agit par exemple d'une temporisation d'une durée prédéterminée).

**Revendications**

1. Station de base contrôlant les communications mises en oeuvre dans une cellule (17) d'un réseau de radio-communication cellulaire et numérique, caractérisée en ce qu'elle comprend un ensemble d'au moins deux relais (13) d'émission et de réception géographiquement répartis dans ladite cellule, chacun desdits relais pouvant émettre des signaux vers des stations mobiles présentes dans une zone de ladite cellule, et recevoir des signaux émis (12) par lesdites stations mobiles, dans ladite zone, et un centre de concentration (15), traitant les signaux (14) reçus par chacun desdits relais (13), et délivrant à chacun desdits relais des signaux (14) à émettre,
et en ce qu'elle affecte sélectivement à chaque communication avec une station mobile (11) un jeu d'au moins deux desdits relais (23).

2. Station de base selon la revendication 1, caractérisée en ce que l'affectation d'un relais (23) à une communication tient compte d'au moins une information représentative de la qualité (31) de la communication entre ladite station mobile (11) et ledit relais correspondant (23), pour la voie montante.

3. Station de base selon la revendication 1 ou 2, caractérisée en ce que, lors d'une phase d'initialisation d'une communication avec une station mobile, ladite affectation est effectuée sur tous les relais (13) de ladite cellule, de façon à effectuer une présélection des meilleurs relais pour continuer ladite communication .

4. Station de base selon l'une quelconque des revendications 1 à 3, caractérisée en ce que, lors d'une phase de communication active avec une station mobile, ladite affectation est effectuée uniquement sur les relais déjà affectés (23) et au moins certains relais disponibles (24), de façon à réactualiser la sélection des meilleurs relais.

5. Station de base selon l'une quelconque des revendications 2 à 4, caractérisée en ce que ladite information appartient au groupe comprenant :

- le rapport signal à interférences pour ladite communication ;
- le rapport signal à bruit pour ladite communication ;
- la puissance reçue par ledit relais pour ladite communication ;
- un taux d'erreur binaire brut et/ou après décodage, pour ladite communication ;
- un taux de perte de trame pour ladite communication ;
- une indication de positionnement géographique.

6. Station de base selon l'une quelconque des revendications 1 à 5, caractérisée en ce que ladite affectation tient compte d'une pondération d'une information sur la puissance reçue par ledit relais (23) par une information sur le rapport signal à interférences ou sur le rapport signal à bruit, pour ladite communication.

7. Station de base selon l'une quelconque des revendications 2 à 6, caractérisée en ce que ladite au moins une information représente :

- une moyenne de valeurs prises sur une durée prédéterminée, lors d'une phase de communication active ;
- une unique valeur mesurée, lors d'une phase d'initialisation d'une communication.

8. Station de base selon l'une quelconque des revendications 1 à 7, caractérisée en ce que tous les relais d'une même cellule émettent de manière synchrone.

9. Station de base selon l'une quelconque des revendications 1 à 8, caractérisée en ce que chacun desdits relais (23) émet (22) :

- l'ensemble des données de signalisation concernant ladite cellule, sur au moins une fréquence balise commune à ladite cellule ;
- uniquement les données de communication concernant la ou les communications auxquelles il est affecté, sur au moins une fréquence de communication.

10. Station de base selon l'une quelconque des revendications 1 à 9, caractérisée en ce que chacun desdits relais (13) transmet (14) audit centre de concentration (15) au moins une des informations appartenant au groupe comprenant :

- un signal analogique en bande radio ou à fréquence intermédiaire ;
- des échantillons du signal reçu en bande de base avant démodulation ;
- des décisions souples sur le contenu du signal reçu après démodulation ;
- des décisions dures sur le contenu du signal reçu après démodulation ;
- un taux d'erreur binaire ;
- une indication de puissance radio du signal reçu ;
- une indication du rapport signal à bruit pour le signal reçu ;
- une indication du rapport signal à interférences pour le signal reçu ;

et en ce que lesdites informations sont recombinées dans ledit centre de concentration (15), de telle façon que la qualité de la communication soit améliorée.

11. Station de base selon l'une quelconque des revendications 1 à 10, caractérisée en ce qu'elle met en oeuvre une technique de saut de fréquence, pour chacune desdites communications.

12. Procédé de contrôle des communications mises en oeuvre dans une cellule (17) d'un réseau de radiocommunication cellulaire et numérique, caractérisé en ce que :

- on répartit géographiquement dans ladite cellule au moins deux relais (13) d'émission et de réception, chacun desdits relais pouvant émettre des signaux vers des stations mobiles présentes dans une zone de ladite cellule, et recevoir des signaux (12) émis par lesdites stations mobiles dans ladite zone ;
- on traite (36) dans un centre de concentration (15) les signaux (14) reçus par l'ensemble desdits relais (13);
- on distribue, depuis ledit centre de concentration (15), des signaux (14) à émettre à chacun desdits relais (13);
- on affecte sélectivement à chacune desdites communications mises en oeuvre dans ladite cellule (17) un jeu d'au moins deux desdits relais.

**13.** Procédé selon la revendication 12, caractérisé en ce que l'affectation d'un relais (23) à une communication tient compte d'au moins une informatio, représentative de la qualité de la communication entre la station mobile et ledit relais correspondant.

**14.** Procédé selon la revendication 12 ou 13, caractérisé en ce que l'affectation d'un jeu de relais (38) est mise à jour périodiquement et/ou lorsqu'un paramètre représentatif de la qualité de la communication est inférieur à un seuil prédéterminé (36).

**15.** Procédé selon l'une quelconque des revendications 12 à 14, caractérisé en ce qu'il est mis en oeuvre en milieu intérieur et/ou extérieur.

**16.** Procédé selon l'une quelconque des revendications 12 à 15, caractérisé en ce que le jeu de relais (23) dédiés à une même communication émet (22) de manière synchrone un même signal destiné à une station mobile (21) en communication.

**17.** Procédé selon l'une quelconque des revendications 12 à 16, caractérisé en ce que ladite affectation constitue une détermination d'une position approximative de ladite station mobile dans ladite cellule.

**18.** Procédé selon l'une quelconque des revendications 12 à 17, caractérisé en ce que lors d'une phase d'initialisation d'une communication avec une station mobile, ladite affectation est effectuée sur tous les relais de ladite cellule, de façon à effectuer une présélection des meilleurs relais pour continuer ladite communication.

**19.** Procédé selon l'une quelconque des revendications 12 à 18, caractérisé en ce que lors d'une phase de communication active avec une station mobile, ladite affectation est effectuée uniquement sur les relais déjà affectés et au moins certains relais disponibles, de façon à réactualiser la sélection des meilleurs relais.

**20.** Procédé selon l'une quelconque des revendications 13 à 19, caractérisé en ce que ladite au moins une information appartient au groupe comprenant :

- le rapport signal à interférences pour ladite communication ;
- le rapport signal à bruit pour ladite communication ;
- la puissance reçue par ledit relais pour ladite communication ;
- un taux d'erreur binaire brut et/ou après décodage, pour ladite communication ;

- un taux de perte de trame pour ladite communication.

**21.** Procédé selon l'une quelconque des revendications 12 à 20, caractérisé en ce que ladite affectation tient compte d'une pondération d'une information sur la puissance reçue par ledit relais par une information sur le rapport signal à interférences ou sur le rapport signal à bruit, pour ladite station mobile.

**22.** Procédé selon l'une quelconque des revendications 13 à 21, caractérisé en ce que ladite au moins une information représente, pour chaque relais ;

- une moyenne de valeurs prises sur une durée prédéterminée, lors d'une phase de communication active ;
- une unique valeur mesurée, lors d'une phase d'initialisation d'une communication.

**23.** Procédé selon l'une quelconque des revendications 12 à 22, caractérisé en ce que l'affectation d'un jeu de relais est mise à jour périodiquement et/ou lorsqu'un paramètre représentatif de la qualité de la communication est inférieur à un seuil prédéterminé.

Fig. 1

Fig. 2

31 — Phase d'initialisation d'appel ?

NON → Phase de communication active — 33

OUI

32 — Tous les relais de la cellule sont à l'écoute

Le(s) relais déjà affecté(s) et le(s) relais disponible(s) sont à l'écoute — 34

35 — Mesure de qualité par chacun de(s) relais qui écoutent

36 — Analyse des mesures

37 — Modification ?

NON →

OUI

OUI

39 — Nouvelle procédure d'écoute ?

NON

Sélection nouveau(x) relais

38

## Fig. 3

**Office européen des brevets**

## RAPPORT DE RECHERCHE EUROPEENNE

Numéro de la demande

EP 98 40 2216

### DOCUMENTS CONSIDERES COMME PERTINENTS

| Catégorie | Citation du document avec indication. en cas de besoin, des parties pertinentes | Revendication concernée | CLASSEMENT DE LA DEMANDE (Int.Cl.6) |
|---|---|---|---|
| X | WO 97 13386 A (ERICSSON TELEFON AB L M) 10 avril 1997 * page 5, ligne 25 – page 14, ligne 15 * | 1-23 | H04Q7/36 |
| X | EP 0 368 673 A (BRITISH TELECOMM) 16 mai 1990 * le document en entier * | 1-23 | |
| X | ANDRESEN S ET AL: "SKINFAKSE SERVICE INTEGRATED RADIO SYSTEM FOR ROAD TRAFFIC" PROCEEDINGS OF THE VEHICLE NAVIGATION AND INFORMATION SYSTEMS CONFERENCE, OSLO, SEPT. 2 - 4, 1992, no. CONF. 3, 2 septembre 1992, pages 455-460, XP000365990 OLAUSSEN L;HELLI E * le document en entier * | 1-23 | |
| A | WO 95 05722 A (MACNAMEE ROBERT JOSEPH GERARD) 23 février 1995 * revendications 1,7,8 * | 1-5,8, 12,17-20 | |
| | | | DOMAINES TECHNIQUES RECHERCHES (Int.Cl.6) |
| A | WO 94 28690 A (ADC TELECOMMUNICATIONS INC ;RUSSELL DAVID S (US); FISCHER LARRY G) 8 décembre 1994 * page 41, ligne 5 – page 51, ligne 16 * | 1-23 | H04Q |
| A | US 5 640 676 A (GARNCARZ JEFFREY ROBERT ET AL) 17 juin 1997 * colonne 2, ligne 66 – colonne 4, ligne 4 * | 1,6,12, 21 | |
| A | EP 0 780 995 A (NOKIA MOBILE PHONES LTD) 25 juin 1997 * revendications * | 1,6,12, 21 | |

-/--

Le présent rapport a été établi pour toutes les revendications

| Lieu de la recherche | Date d'achèvement de la recherche | Examinateur |
|---|---|---|
| LA HAYE | 25 novembre 1998 | Janyszek, J-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

# RAPPORT DE RECHERCHE EUROPEENNE

Numéro de la demande

EP 98 40 2216

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| P,X | WO 98 38825 A (NOKIA TELECOMMUNICATIONS OY) 3 septembre 1998 <br> * le document en entier * <br> ----- | 1-23 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 25 novembre 1998 | Janyszek, J-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 98 40 2216

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

25-11-1998

| Document brevet cité au rapport de recherche | | Date de publication | Membre(s) de la famille de brevet(s) | | | Date de publication |
|---|---|---|---|---|---|---|
| WO 9713386 | A | 10-04-1997 | AU | 7232896 | A | 28-04-1997 |
| | | | CA | 2233037 | A | 10-04-1997 |
| | | | EP | 0853862 | A | 22-07-1998 |
| EP 0368673 | A | 16-05-1990 | AU | 638426 | B | 01-07-1993 |
| | | | AU | 4517189 | A | 28-05-1990 |
| | | | CA | 2002295 | A,C | 11-05-1990 |
| | | | DE | 68914287 | D | 05-05-1994 |
| | | | DE | 68914287 | T | 21-07-1994 |
| | | | DK | 87991 | A | 10-05-1991 |
| | | | EP | 0444067 | A | 04-09-1991 |
| | | | ES | 2050815 | T | 01-06-1994 |
| | | | FI | 97323 | B | 15-08-1996 |
| | | | WO | 9005432 | A | 17-05-1990 |
| | | | HK | 136496 | A | 02-08-1996 |
| | | | JP | 4501642 | T | 19-03-1992 |
| | | | US | 5682256 | A | 28-10-1997 |
| WO 9505722 | A | 23-02-1995 | AU | 7272394 | A | 14-03-1995 |
| | | | EP | 0713631 | A | 29-05-1996 |
| WO 9428690 | A | 08-12-1994 | US | 5627879 | A | 06-05-1997 |
| | | | AU | 7045494 | A | 20-12-1994 |
| | | | BR | 9406730 | A | 27-05-1997 |
| | | | CN | 1127056 | A | 17-07-1996 |
| | | | JP | 8510878 | T | 12-11-1997 |
| | | | US | 5621786 | A | 15-04-1997 |
| | | | US | 5642405 | A | 24-06-1997 |
| | | | US | 5644622 | A | 01-07-1997 |
| | | | US | 5657374 | A | 12-08-1997 |
| US 5640676 | A | 17-06-1997 | CA | 2193690 | A | 14-11-1996 |
| | | | EP | 0770313 | A | 02-05-1997 |
| | | | FI | 965221 | A | 27-12-1996 |
| | | | JP | 10503353 | T | 24-03-1998 |
| | | | WO | 9636190 | A | 14-11-1996 |
| EP 0780995 | A | 25-06-1997 | GB | 2308530 | A | 25-06-1997 |
| | | | JP | 9186636 | A | 15-07-1997 |
| WO 9838825 | A | 03-09-1998 | FI | 970842 | A | 28-08-1998 |

EPO FORM P0460

Pour tout renseignement concernant cette annexe : voir Journal Officiel de l'Office européen des brevets, No.12/82